Europäisches Patentamt

European Patent Office

Office européen des brevets

(19)

(11) Veröffentlichungsnummer : **0 264 388**
**B1**

(12) # EUROPÄISCHE PATENTSCHRIFT

(45) Veröffentlichungstag der Patentschrift :
03.01.90

(21) Anmeldenummer : 87902044.4

(22) Anmeldetag : 19.03.87

(86) Internationale Anmeldenummer :
PCT/DE 87/00117

(87) Internationale Veröffentlichungsnummer :
WO/8706339 (22.10.87 Gazette 87/23)

(51) Int. Cl.$^5$ : G 01 L   9/04, G 01 L   1/22

(54) SCHALTUNGSANORDNUNG ZUR MESSUNG EINER MECHANISCHEN VERFORMUNG, INSBESONDERE UNTER EINWIRKUNG EINES DRUCKS.

(30) Priorität : 16.04.86 DE 3612810

(43) Veröffentlichungstag der Anmeldung :
27.04.88 Patentblatt 88/17

(45) Bekanntmachung des Hinweises auf die Patenterteilung : 03.01.90 Patentblatt 90/01

(84) Benannte Vertragsstaaten :
DE FR GB IT SE

(56) Entgegenhaltungen :
US—A— 4 478 527
Patent Abstracts of Japan, Band 9, Nr 243, (P-392)(1966) 30 September 1985 & JP-A-6097230
Design Engineering, September 1984 (London, GB), "Ceramic diaphragm transducer offers control up to 3000 lb/in2", Seiten 145 und 149
Measurement Techniques, Band 20, Nr 5, Mai 1977, (New York, USA), V.I. Vaganov et al., "Integrated pressure transducer temperature compensation circuit", Seiten 706, 707

(73) Patentinhaber : ROBERT BOSCH GMBH
Postfach 50
D-7000 Stuttgart 1 (DE)

(72) Erfinder : HECHT, Hans
Hebichstrasse 12
D-7015 Korntal (DE)
Erfinder : KUHNT, Winfried
Rotenwaldstrasse 41A
D-7000 Stuttgart 1 (DE)

**Beschreibung**

## Stand der Technik

Die Erfindung geht aus von einer Schaltungsanordnung nach der Gattung des Hauptanspruchs.

Aus dem DE-GM 81 19 025 ist ein Sensor zur Erfassung des Druckes eines Mediums unter Verwendung wenigstens eines seinen Widerstandswert unter Druckeinwirkung ändernden Elements bekannt. Als Element wird dabei ein handelsübliches Widerstandsbauelement, vorzugsweise ein Kohleschichtwiderstand, ein Dünnschichtwiderstand oder ein Dickschichtwiderstand verwendet. Die Elemente sind vorzugsweise in einer Brückenschaltung angeordnet, wobei zur Kompensation von Temperatureinflüssen und zur Erhöhung des druckabhängigen Signales Widerstandsbauelemente mit unterschiedlichem Temperatur- und Druckkoeffizienten verwendet werden. Weiterhin wird vorgeschlagen, Widerstandselemente auf einer durch Druckeinwirkung elastisch verformbaren Unterlage anzuordnen, so daß eine Signalerhöhung durch gleichzeitiges Einwirken des Druckes sowie eine Dehnung bzw. Stauchung des Widerstandsbauelementes eintritt.

Aus der US-A-4 478 527 ist eine Vorrichtung zur Differenzdruckmessung bekannt, bei der eine Silizium-Membran zusammen mit zwei Glasplatten ein Paar von Kondensatoren bildet, deren Kapazität sich im umgekehrten Sinn bei Druckänderungen verändert.

Das Ausgangssignal $E_l$ dieser Vorrichtung ist temperaturabhängig, es sind daher Maßnahmen vorgesehen, die diese Temperaturabhängigkeit kompensieren sollen. Dazu wird dem Ausgangssignal $E_l$ in einem Summierpunkt 12 ein von der Temperatur abhängiges Signal, das mittels eines temperaturabhängigen Widerstandes erzeugt wird, überlagert. Das so entstehende Signal liegt am invertierenden Eingang eines Differenzverstärkers 22, an dessen Ausgang das korrigierte Differenzdrucksignal abgegriffen werden kann.

Beim Entwurf von Schaltungsanordnungen für die Auswertung von Meßgebersignalen ist es eine häufig gestellte Aufgabe, geeignete Maßnahmen zur Temperaturkompensation vorzusehen. Üblicherweise wird dabei zunächst der Temperaturgang des Ausgangssignales der Schaltungsanordnung errechnet oder aufgezeichnet. Der Temperaturgang läßt sich mathematisch als eine von der Temperatur abhängige Funktion darstellen, die sich wiederum in eine Potenzreihe entwickeln läßt. Für die meisten technischen Anwendungsfälle ist es ausreichend, wenn das lineare Glied des Temperaturgangs kompensiert wird, da die Glieder höherer Ordnung gegenüber einer zulässigen Toleranz ausreichend klein sind. Für hochgenaue Anwendungen sind jedoch auch Vorkehrungen zu treffen, um quadratische und manchmal auch höherwertige Anteile des Temperaturganges zu kompensieren. Die eigentliche Kompensation geschieht dann allgemein so, daß ein gesondertes, von der Temperatur abhängiges Signal innerhalb der Schaltungsanordnung gebildet wird, welches zum Ausgangssignal in geeigneter Weise addiert oder subtrahiert wird.

Der vorliegenden Erfindung liegt dementsprechend die Aufgabe zugrunde, eine Schaltungsanordnung zur Messung einer mechanischen Verformung, insbesondere unter Einwirkung eines Drucks, zu finden, die eine hochgenaue temperaturkompensierte Messung ermöglicht.

Gelöst wird die Aufgabe durch die Schaltungsanordnung mit den im Hauptanspruch angegebenen Merkmalen.

## Vorteile der Erfindung

Die erfindungsgemäße Schaltungsanordnung mit den kennzeichnenden Merkmalen des Hauptanspruchs hat gegenüber den aus dem Stand der Technik bekannten Schaltungsanordnungen den besonderen Vorteil, daß nicht nur eine Kompensation des statischen Temperaturganges erfolgt, sondern daß wegen der Zuführung des Sensorsignals über einen temperaturabhängigen Widerstand gleichzeitig der Temperaturgang der Meßempfindlichkeit kompensiert wird. Von weiterem besonders großem Vorteil der erfindungsgemäßen Schaltungsanordnung ist es, daß der quadratische Anteil des Temperaturgangs durch einen Teil der Schaltungsanordnung kompensiert wird, der allein aus Widerstandsbauelementen besteht. Diese lassen sich daher besonders einfach in Dickschichttechnik durch Widerstandspasten mit verschiedenen Temperaturkoeffizienten und gegebenenfalls durch anschließenden Abgleich mit Hilfe eines Laserstrahls herstellen.

## Zeichnung

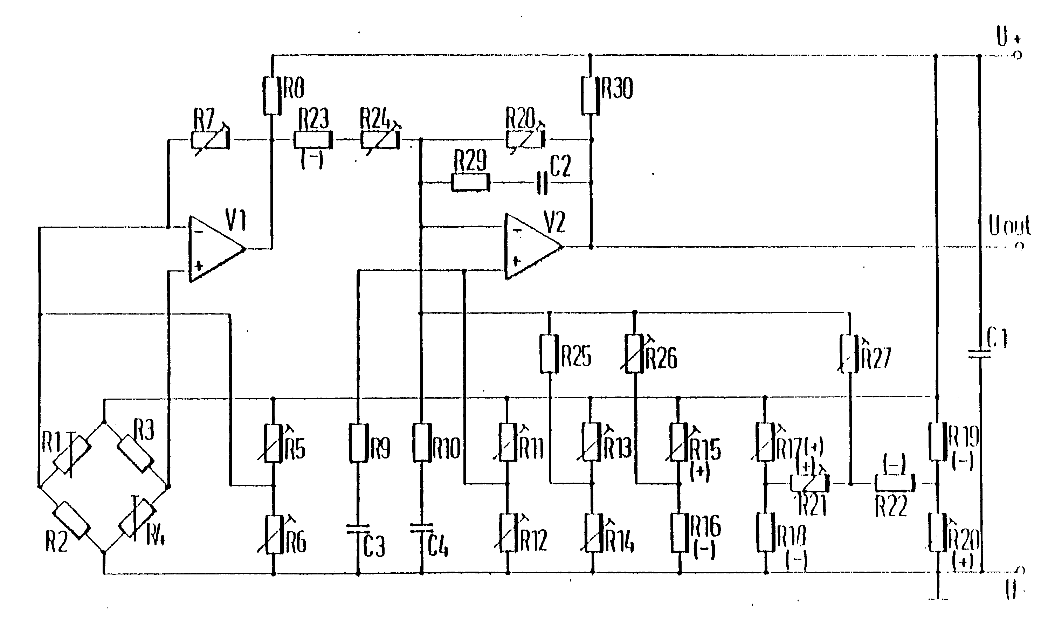

Ein Ausführungsbeispiel der Erfindung ist als Schaltplan in der Zeichnung dargestellt und in der nachfolgenden Beschreibung näher erläutert.

## Beschreibung des Ausführungsbeispiels

Die in der Zeichnung dargestellte Schaltungsanordnung wird zwischen Versorgungsspannungklemmen $U_+$ und $U_-$ betrieben. Die Klemme $U_-$ stellt die Masse der Schaltungsanordnung dar, während an der Klemme U+ eine stabilisierte Speisespannung von 5 V anliegt. Ein zwischen die Versorgungsspannungsklemmen geschalteter Kondensator C1 dient zum Schutz gegen Spannungsspitzen, die etwa von der Zündanlage eingestreut werden können.

Zwischen die Versorgungsspannungsklemmen ist eine Widerstandsbrückenschaltung R1, R2, R3, R4 geschaltet, deren diagonalen Anschlüsse auf die Eingänge eines Verstärkers V1 führen. Und zwar führt der Verbindungspunkt der Widerstände R1, R2 auf den invertierenden Eingang und der Verbindungspunkt der Widerstände R3, R4 auf den nichtinvertierenden Eingang des Verstärkers V1. Der Ausgang des Verstärkers V1 ist über einen Widerstand R7 auf den invertierenden Eingang zurückgekoppelt. Zwischen die Versorgungsspannungsklemmen ist weiterhin die Serienschaltung zweier Widerstände R5, R6 geschaltet, deren Verbindungspunkt ebenfalls an den invertierenden Eingang des Verstärkers V1 angeschlossen ist.

Die Widerstände R1, R2, R3, R4 bilden zusammen einen Drucksensor, wie er beispielsweise aus dem DE-GM 81 19 025 bekannt ist. Die Widerstände befinden sich auf einer Dickschichtmembran und sind so angeordnet, daß bei Druckeinwirkung auf die Membran die Widerstände R1, R4 gestaucht werden, während die Widerstände R2, R3 in ihrer Länge gedehnt werden. Durch einen piezoresistiven Effekt der Dickschichtwiderstandspaste, aus der die Widerstände R1, R2, R3, R4 gebildet werden, ist deren Widerstandsänderung etwa achtmal so groß wie deren geometrische Längenänderung.

Da die Widerstandsbrückenschaltung mit konstanter Spannung betrieben wird, erscheint bei Druckeinwirkung auf die Dickschichtmembran eine Verstimmung der Brücke, die sich als Auftreten einer Diagonalspannung der Brücke äußert, die durch den Verstärker V1 verstärkt wird. Der Verstärkungsfaktor der Anordnung wird durch den Widerstand R7 eingestellt, während mit dem Widerstandsteiler R5, R6 ein gewünschter Offset eingestellt wird.

Diese Schaltungsanordnung zeigt neben dem Druckmeßeffekt allerdings auch einen Temperatureffekt, der zur Druckmessung nicht erwünscht ist. Der Temperatureffekt setzt sich aus einem Temperaturgang der Druckmeßempfindlichkeit und einem Temperaturgang des Offsets zusammen. Der Temperaturgang des Offset besitzt einen gekrümmten Verlauf, der sich näherungsweise aus einem linearen und einem quadratischen Anteil zusammensetzt.

Der Ausgang des Verstärkers V1 führt über eine Serienschaltung zweier Widerstände R23, R24 auf den invertierenden Eingang eines zweiten Verstärkers V2. Der hierfür nötige Strom wird über einen Widerstand R8 geliefert, der zwischen die Versorgungsspannungklemme U+ und den Ausgang des ersten Verstärkers V1 geschaltet ist. Der Verstärkungsfaktor des zweiten Verstärkers V2 wird über einen Widerstand R28 festgelegt, der zwischen den Ausgang und den invertierenden Eingang des Verstärkers V2 geschaltet ist. Der Ausgang des Verstärkers V2 ist mit einer Ausgangsklemme U_out der gesamten Schaltungsanordnung verbunden. Der Ausgangsstrom der Schaltungsanordnung wird über einen Widerstand R30 gewonnen, der zwischen die Versorgungsspannungsklemme U+ und den Ausgang des zweiten Verstärkers V2 geschaltet ist.

Zwischen die Klemme U+ und die Klemme U_ ist weiterhin die Serienschaltung zweier Widerstände R11, R12 geschaltet, deren Verbindungspunkt mit dem nichtinvertierenden Eingang des Verstärkers V2 verbunden ist. Über das Teilerverhältnis der Widerstände R11, R12 kann eine Grobeinstellung des Offsets des Verstärkers V2 eingestellt werden. Eine Feineinstellung ist mit drei Widerständen R13, R14, R25 möglich. Hierfür sind die Widerstände R13, R14 in Serie zwischen die Klemmen U+ und U_ geschaltet, während ihr Verbindungspunkt über den Widerstand R25 mit dem invertierenden Eingang des Verstärkers V2 verbunden ist.

Zur Glättung des Ausgangssignales und zur Frequenzgangkompensation des Verstärkers V2 ist dem Rückkopplungswiderstand R28 die Serienschaltung eines Widerstandes R29 und eines Kondensators C2 parallelgeschaltet. Weiterhin ist der nichtinvertierende Eingang über einen Widerstand R9 und einen Kondensator C3 sowie der invertierende Eingang über einen Widerstand R10 und einen Kondensator C4 mit der Masse der Schaltung an der Klemme U_ verbunden.

Der verbleibende Teil der in der Zeichnung dargestellten Schaltungsanordnung dient zur Temperaturgangkompensation des Offsets. Hierfür ist zwischen die Klemme U+ und die Klemme U_ die Serienschaltung zweier Widerstände R15, R16 geschaltet, deren Verbindungspunkt über einen Widerstand R26 mit dem invertierenden Eingang des Verstärkers V2 verbunden ist. Weiterhin ist zwischen die Klemmen U+ und U_ eine Widerstandsbrückenschaltung R17, R18, R19, R20 geschaltet, wobei in deren Brückendiagonale zwischen die Verbindungspunkte der Widerstände R17, R18, und der Widerstände R19, R20 zusätzlich eine Serienschaltung zweier Widerstände R21, R22 gelegt ist. Der Verbindungspunkt der Widerstände R21, R22 führt über einen Widerstand R27 ebenfalls auf den invertierenden Eingang des Verstärkers V2.

Das Ausgangssignal des Verstärkers V1 läßt sich näherungsweise durch folgende Gleichung darstellen :

$$U_{V1} = U_0 + a_0 \cdot p + a_1 \cdot p \cdot T + a_2 \cdot T + a_3 \cdot T^2$$

Mit

$U_{V1}$ : Ausgangssignal des Verstärkers V1

$U_0$ : Gleichanteil des Ausgangssignals

p : Druck auf den Drucksensor
T : Temperatur der Schaltungsanordnung
$a_0$, $a_1$, $a_2$, $a_3$ : Koeffizienten.

Gewünscht wird nun ein Ausgangssignal, das bis auf den Gleichanteil nur vom Druck p und möglichst nicht von der Temperatur T abhängt. Erreicht wird dies durch eine Temperaturgangkompensation, bei der zum Ausgangssignal des Verstärkers V1 geeignete · temperaturabhängige Signale mit umgekehrten Vorzeichen hinzuaddiert werden. Hierfür ist der Verstärker V2 vorgesehen, der als Summierverstärker beschaltet ist.

Die temperaturabhängigen Signale werden in der Schaltungsanordnung dadurch erzeugt, daß geeignete Widerstände in Dickschichttechnik mit Hilfe von Widerstandspasten realisiert sind, die einen eigenen positiven oder negativen Temperaturkoeffizienten besitzen. Und zwar besitzen die Widerstände R15, R17, R21, R20 einen positiven Temperaturkoeffizienten, während die Widerstände R23, R16, R18, R19, R22 einen negativen Temperaturkoeffizienten besitzen. Das lineare Temperaturglied des Ausgangssignales des Verstärkers V1 wird nun mit Hilfe der Widerstände R15, R16, R26 kompensiert. Das quadratische Temperaturglied wird durch die Widerstände R17 bis R22 und R27 kompensiert. Der sowohl vom Druck als auch von der Temperatur abhängige Anteil wird mit Hilfe der Widerstände R23, R24 kompensiert.

Durch geeignete Dimensionierung der jeweiligen Widerstände und ihrer Temperaturkoeffizienten und Abgleich der Summationswiderstände R24, R26, R27 läßt sich nun eine hochgenaue, von der Temperatur weitgehend unabhängige Druckmessung mit Hilfe des Drucksensors R1, R2, R3, R4 erreichen.

**Patentansprüche**

1. Schaltungsanordnung zur Messung einer mechanischen Verformung, insbesondere unter Einwirkung eines Druckes, mit einem Sensor (R1, R2, R3, R4), der unter Einwirkung einer Verformung ein analoges Spannungssignal abgibt, das über einen Widerstand (R22) einem Summierverstärker (V2) zugeführt wird, dem weiterhin zur Temperaturkompensation ein von der Temperatur abhängiges Signal zugeführt wird und dessen Ausgangssignal zur Bildung eines Ausgangssignales ($U_{out}$) der Schaltungsanordnung herangezogen wird, das von der gemessenen mechanischen Verformung abhängt, dadurch gekennzeichnet, daß der Widerstand (R23), über den das Sensorsignal dem Summierverstärker (V2) zugeführt wird, temperaturabhängig ist.

2. Schaltungsanordnung nach Anspruch 1, dadurch gekennzeichnet, daß das von der Temperatur abhängige Signal aus einem linear von der Temperatur abhängigen Signal und einem quadratisch von der Temperatur abhängigen Signal besteht.

3. Schaltungsanordnung nach Anspruch 1 oder 2, dadurch gekennzeichnet, daß das Sensorsignal über einen einstellbaren Widerstand (R24) dem Summierverstärker (V2) zugeführt wird.

4. Schaltungsanordnung nach einem der vorhergehenden Ansprüche, dadurch gekennzeichnet, daß das temperaturabhängige Signal über einen einstellbaren Widerstand (R26, R27) dem Summierverstärker (V2) zugeführt wird.

5. Schaltungsanordnung nach einem der vorhergehenden Ansprüche, dadurch gekennzeichnet, daß das Sensorsignal durch eine Widerstandsbrückenschaltung (R1, R2, R3, R4) in Dickschichttechnik gebildet wird.

6. Schaltungsanordnung nach Anspruch 5, dadurch gekennzeichnet, daß das Sensorsignal durch einen Verstärker (V1) verstärkt wird, dessen Verstärkung durch einen Rückkoplungswiderstand (R7) und dessen Offset durch einen am Eingang des Verstärkers angeordneten Spannungsteiler (R5, R6) eingestellt wird.

**Claims**

1. Circuitry for measuring a mechanical deformation, especially under pressure, having a sensor (R1, R2, R3, R4) which outputs under the effect of a deformation an analog voltage signal which is fed via a resistor (R22) to a summation amplifier (V2), to which a temperature-dependent signal is furthermore fed for temperature compensation, and the output signal of which is used for forming an output signal ($U_{out}$) of the circuitry which is dependent on the measured mechanical deformation, characterized in that the resistor (R23) via which the sensor signal is fed to the summation amplifier (V2) is temperature-dependent.

2. Circuitry according to Claim 1, characterized in that the temperature-dependent signal is composed of a linear temperature-dependent signal and a square temperature-dependent signal.

3. Circuitry according to Claim 1 or 2, characterized in that the sensor signal is fed to the summation amplifier (V2) via an adjustable resistor (R24).

4. Circuitry according to one of the preceding claims, characterized in that the temperature-dependent signal is fed to the summation amplifier (V2) via an adjustable resistor (R26, R27).

5. Circuitry according to one of the preceding claims, characterized in that the sensor signal is formed in thick-film technology by a resistance bridge circuit (R1, R2, R3, R4).

6. Circuitry according to Claim 5, characterized in that the sensor signal is amplified by an amplifier (V1), the amplification of which is set by a feedback resistor (R7), and the offset of which is set by a voltage divider (R5, R6) arranged at the input of the amplifier.

**Revendications**

1. Circuit pour mesurer une déformation mécanique, notamment sous l'action d'une pression, à l'aide d'un capteur (R1, R2, R3, R4) qui, soumis à une déformation, fournit un signal de tension analogique appliqué par une résistance (R22) à un amplificateur additionneur (V2) recevant par ailleurs un signal dépendant de la température pour assurer la compensation de la température, amplificateur dont le signal de sortie est utilisé pour former un signal de sortie ($U_{out}$) du circuit dépendant de la déformation mécanique, mesurée, circuit caractérisé en ce que la résistance (R23) par laquelle le signal du capteur est appliqué à l'amplificateur additionneur (V2) est une résistance dépendant de la température.

2. Circuit selon la revendication 1, caractérisé en ce que le signal dépendant de la température se compose d'une partie de signal dépendant linéairement de la température et d'une partie de signal dépendant du carré de la température.

3. Circuit selon la revendication 1 ou 2, caractérisé en ce que le signal de capteur est appliqué à l'amplificateur additionneur (V2) par l'intermédiaire d'une résistance réglable (R24).

4. Circuit selon l'une des revendications précédentes, caractérisé en ce que le signal dépendant de la température est appliqué à l'amplificateur additionneur (V2) par l'intermédaire d'une résistance réglable (R26, R27).

5. Circuit selon l'une des revendications précédentes, caractérisé en ce que le signal de capteur est formé par un circuit en pont de résistances (R1, R2, R3, R4) réalisées selon la technique des couches épaisses.

6. Circuit selon la revendication 5, caractérisé en ce que le signal de capteur est amplifié par l'amplificateur (V1) dont l'amplification est réglée par une résistance de réaction (R7) et son décalage par un diviseur de tension (R5, R6) relié à une entrée de l'amplificateur.

1